# EUROPÄISCHE PATENTSCHRIFT

(11) **EP 1 445 603 B1**
(45) Veröffentlichungstag und Bekanntmachung des Hinweises auf die Patenterteilung: **17.07.2013**
(21) Anmeldenummer: 04002460.6
(22) Anmeldetag: 04.02.2004
(51) Int. Cl.: G01N 21/64, G01N 21/77

(54) **Fluorimetrische Bestimmung von Analyten durch Amin-N-Oxide als Redoxindikatoren**
Fluorometric Determination of Analytes with Amine-N-Oxides as Redox-Indicators
Détérmination fluorométrique d'analytes avec des Amines-N-Oxides comme Indicateurs Redox

(30) Priorität: 04.02.2003 DE 10304448
(43) Veröffentlichungstag der Anmeldung: 11.08.2004
(73) Patentinhaber: F. Hoffmann-La Roche AG, 4070 Basel (CH); Roche Diagnostics GmbH, 68305 Mannheim (DE)
(72) Erfinder: Horn, Carina, 64665 Alsbach-Haehnlein (DE); Hoenes, Joachim, 64673 Zwingenberg (DE); Spinke, Jürgen, 64653 Lorsch (DE)
(74) Vertreter: Weiss, Wolfgang

(56) Entgegenhaltungen:
- DE-A- 19 800 537
- US-A- 5 334 508
- DATABASE WPI Section Ch, Week 198118 Derwent Publications Ltd., London, GB; Class E19, AN 1981-32160d XP002283234 & SU 757 943 A (DRUZHININ A A), 25. August 1980 (1980-08-25)
- DATABASE WPI Section Ch, Week 199541 Derwent Publications Ltd., London, GB; Class B04,Page 3, AN 1995-035059 XP002283235 & RU 2 012 869 C (UNIV KAZAN TECHN), 15. Mai 1994 (1994-05-15)
- SHIPTON M ET AL: "Evaluation of benzofuroxan as a chromophoric oxidizing agent for thiol groups by using its reactions with papain, ficin, bromelain and low-molecular-weight thiols." THE BIOCHEMICAL JOURNAL. ENGLAND 1 MAR 1977, Bd. 161, Nr. 3, 1. März 1977 (1977-03-01), Seiten 627-637, XP009031746 ISSN: 0264-6021
- DATABASE WPI Section Ch, Week 199345 Derwent Publications Ltd., London, GB; Class E15,Page 3, AN 1993-358217 XP002283236 & SU 1 770 857 A (KAZAN KIROV CHEM TECHN), 23. Oktober 1992 (1992-10-23)
- WANG X. ET AL: "The Influence of High-Temperature Water on the Reaction Pathways of Nitroanilines", THE JOURNAL OF SUPERCRITICAL FLUIDS, vol. 8, no. 3, 1995, pages 236-249,
- THOMPSON S ET AL: "Mutagenicity of anti-cancer nitrobenzofuroxans", MUTATION RESEARCH, ELSEVIER, AMSTERDAM, NL, vol. 48, no. 2, 1 April 1977 (1977-04-01), pages 145-153, XP025206853, ISSN: 0027-5107, DOI: 10.1016/0027-5107(77)90154-3 [retrieved on 1977-04-01]

## Beschreibung

Die Erfindung betrifft Verfahren und die Verwendung eines Reagenz zur fluorimetrischen Bestimmung von Analyten.

Es existieren zahlreiche Möglichkeiten zur Bestimmung von Analyten, beispielsweise für diagnostische Anwendungen. Eine Möglichkeit besteht darin, den Analyten über eine Redoxreaktion und einen Redoxindikator zu bestimmen. Hierbei wirkt ein oxidierendes oder reduzierendes System direkt oder über einen Mediator auf den Redoxindikator ein. Die Anwesenheit des Analyten führt zu einer Reduktion oder Oxidation des Redoxindikators, wodurch eine qualitative oder quantitative Bestimmung erfolgen kann.

Je nach Art des verwendeten Redoxindikators kann die Bestimmung des Indikators durch ein colorimetrisches, fluorimetrisches oder elektrochemisches Nachweisverfahren erfolgen. Beispiele für colorimetrische Nachweisreagenzien sind Heteropolysäuren (EP-B-0 431 456), Tetrazoliumverbindungen (EP-B-0 574 769), nitrosoaromatische Verbindungen (EP-A-0 620 283(), RIND-Verbindungen (EP-B-0 190 740), Phenazine (WO 93/06487) und Indanthrone (EP-B-0 831 327). Beispiele für elektrochemische Nachweisreagenzien sind Nitrosoaromaten, Phenazine, Kaliumhexacyanoferrat und Benzochinone (vgl. z.B. EP-A-0 441 222 und EP-A-0 505 494). Beispiele für fluorimetrische Nachweisreagenzien sind z.B. Resazurin (US 5,912,139), Übergangsmetallkomplexe (Ryabov et al., JBIC 4 (1999) 175-182; Woltman et al., Anal Chem. 71 (1999) 1504-1512) sowie Scopoletin, Esculetin, p-Hydroxyphenylessigsäure, Di-chlorofluorescein, N-acetyl-3,7-dihydroxyphenoxazin, und MNBDH, die ausschließlich zum H₂O₂-Nachweis Verwendung finden (siehe auch R.

Haughland, Handbook of Fluorescent Probes and Research Chemicals, 6th Ed. 1996).

Die aus dem Stand der Technik bekannten fluorimetrischen Nachweisreagenzien weisen jedoch einige Nachteile auf. So erfordern die meisten bekannten Fluoreszenzindikatoren die Bestimmung von Metaboliten, wie z.B. Glucose über den Nachweis von mit Glucose-Oxidase generiertem H₂O₂. Diese Reaktion erfordert meist noch die katalytische Unterstützung des Enzyms Peroxidase und wird stark durch Elektronendonoren, wie z.B. Harnsäure oder Billirubin, gestört. Auch sind die Reagenzien nicht über längere Zeiträume stabil.

Von Vorteil sind dagegen Redoxindikatoren, die einen von Sauerstoff unabhängigen Nachweis von Glucose erlauben, d.h. die anstelle von Sauerstoff direkt ein Elektron von einem oxidierenden Enzym empfangen. Als geeignete Elektronen-Akzeptoren sind dafür allerdings nur Resazurin und Os- oder Ru-Komplexe bekannt. Bei Resazurin überlappt jedoch die Emissionsbande des durch die Redoxreaktion gebildeten Resorufins stark mit der Absorptionsbande des nicht umgesetzten Resazurins, was zu einer deutlichen Verringerung der Empfindlichkeit der Analytbestimmung führt. Die Übergangsmetallkomplexe werden aufgrund ihres hohen Redoxpotentials (z.B. Ru-Komplexe) stark von Verbindungen, wie Ascorbinsäure, gestört. Auch variiert ihre Fluoreszenzeffizienz mit dem Sauerstoffgehalt der Probe.

Des Weiteren ist bei den bisher bekannten Fluoreszenzindikatoren die Verwendung von Anregungslichtquellen vor allem auf den UV und grünen Bereich des Lichtes limitiert. So sind z.B. nur unzureichende Verbindungen bekannt, die die Verwendung der besonders starken blauen und roten LEDs erlaubt.

US 5,334,508 berichtet über Verfahren und Wirkstoffe für die kolometrische Bestimmung von einem Analyten durch enzymatische Oxidation.

Shipton M et al., The Biochemical Journal, England 1. März 1977, Bd. 161, 3, 1. März 1977 (1977-03-01), Seiten 627-637 berichtet über die Evaluation von Benzofuroxan als ein chromophorer oxidierender Wirkstoff für Thiolgruppen durch Verwendung seiner Reaktionen mit Papain, Ficin, Bromelain und niedrigmolekularen Thiolen.

Wang X et al., The Journal of Supercritical Fluids, Bd. 8, Nr. 3, 1995, Seiten 236-249 berichtet über den Einfluss von Hochtemperaturwasser auf die Reaktionswege von Nitroanilinen.

Thomson S et al., Mutation Research, Elsevier, Amsterdam, NL, Bd. 48, Nr. 2, 01.04.1977 (1977-04-01), Seiten 145-153 berichtet über die Mutagenität von Antikrebs-Nitrobenzofuroxanen.

Eine Aufgabe der vorliegenden Erfindung bestand somit darin, neue redoxaktive Verbindungen als Nachweisreagenzien für die fluorimetrische Bestimmung von Analyten bereitzustellen, mit denen die Nachteile des Standes der Technik zumindest teilweise beseitigt werden können.

Die erfindungsgemäße Lösung dieser Aufgabe besteht darin, als Redoxindikatoren das N-Oxid von NBD-Amin oder Derivaten davon bereitzustellen. Das durch Reduktion entstehende NBD-Amin zeichnet sich durch eine hohe Fluoreszenz aus und ist sehr gut mit blauer Lichtstrahlung anregbar.

Ein erster Aspekt der vorliegenden Erfindung ist somit ein Verfahren zum Nachweis eines Analyten durch eine Redoxreaktion und eine fluorimetrische Bestimmung, dadurch gekennzeichnet, dass man eine den Analyten enthaltende Probe mit einem Nachweisreagenz inkontakt bringt, das als fluorimetrischen Redoxindikator eine Verbindung der allgemeinen Formel (I) enthält: 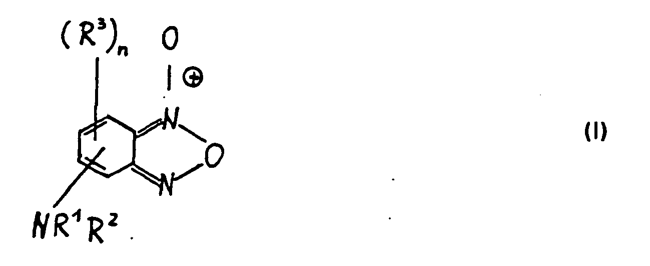 worin R¹ und R² jeweils unabhängig ausgewählt werden aus R, (CH₂CH₂O)ₘR, COR, COOR und OCOR,
R³ jeweils unabhängig ausgewählt wird aus NO₂ CN, R, OR, OCOR, COOR, SR und Halogen,
R H oder C₁-C₄-Alkyl ist, wobei Alkyl gegebenenfalls mit Halogen, OR, SR, NR₂, COOR, CONR₂, SO₃R und Salzen hiervon oder/und PO(OR)₃ und Salzen hiervon substituiert ist, m eine ganze Zahl von 1-20, vorzugsweise von 1-10 ist und n 1, 2 oder 3 ist.

Ein weiterer Aspekt der Erfindung ist die Verwendung eines Reagenz zum Nachweis eines Analyten durch eine Redoxreaktion und eine fluorimetrische Bestimmung, das als fluorimetrischen Redoxindikator eine Verbindung der allgemeinen Formel (I), wie zuvor beschrieben, enthält.

Die vorliegende Erfindung eignet sich um Nachweis beliebiger Analyten, die durch eine Redoxreaktion bestimmt werden können. Der Nachweis kann qualitativ, semi-quantitativ oder quantitativ erfolgen. In einer Ausführungsform der Erfindung kann der Analyt eine reduzierbare oder oxidierbare Substanz sein, beispielsweise ein in einer Körperflüssigkeit, wie etwa Blut, Serum, Plasma, Urin etc., vorhandener Metabolit. In diesem Fall. verwendet man zweckmäßigerweise ein Nachweisreagenz, das neben dem Redoxindikator weiterhin ein oder mehrere Enzyme zur Reduktion oder Oxidation des Analyten sowie gegebenenfalls Coenzyme, wie Nicotinnucleosid-Derivate, z.B. NAD⁺, NADP⁺ oder Flavinnucleosid- Derivate, z.B. FAD, enthält. Bevorzugte Beispiele für derartige Analyten sind Glucose, Lactat, Alkohol, Galactose, Cholesterin, Fructose, Glycerin, Pyruvat, Creatinin, Alanin, Phenylalanin, Leucin, Triglyceride, HDL-Cholesterin. Der Nachweis von Glucose kann beispielsweise nach bekannten Verfahren mit Glucose-Oxidase (GOD), Glucose-Dye- Oxidoreductase (GlucDOR) oder Glucose-Dehydrogenase (GDH)/Diaphorase erfolgen.

Darüber hinaus kann der Analyt jedoch auch ein eine Redoxreaktion katalysierendes Enzym sein, beispielsweise eine Oxidoreduktase, wie etwa Glucoseoxidase, Glucose-Dye-Oxidoreductase, Dehydrogenasen oder ein Enzym, dessen Reaktion an eine Oxidoreduktase-Reaktion gekoppelt werden kann.

Neben dem Redoxindikator und - sofern erforderlich - einem Enzym zur Reduktion der Oxidation des Analyten kann das Nachweisreagenz weitere übliche Bestandteile, wie etwa Coenzyme, Hilfssubstanzen, Puffer und gegebenenfalls Mediatoren, enthalten. Als Mediatoren sind Substanzen geeignet, welche die Elektronenaufnahme des Redoxindikators (I) unterstützen. Generell sind jedoch solche Redoxindikatoren bevorzugt, die direkt Elektronen aufnehmen können.

Die Durchführung des erfindungsgemäßen Verfahrens erfolgt in üblichen Testformaten, beispielsweise in Trocken- und Nasstests. Bei einem Trockentest wird als Träger ein saugfähiges Material, z.B. in Form eines Teststreifens, verwendet, auf dem das Nachweisreagenz in trockener Form, z.B. als Lyophilisat, aufgebracht sein kann. Flüssigtests wiederum werden in einer Flüssigphase in geeignete Reaktionsgefäßen, z.B. Küvetten, Mikrotiterplatten etc., durchgeführt, wobei das Nachweisreagenz im Reaktionsgefäß selbst oder in separaten Behältern in trockener oder flüssiger Form vorgelegt werden kann.

Zur fluorimetrischen Bestimmung wird ein Anregungslicht mit einer vorbestimmten Wellenlänge auf die Probe gestrahlt und das von der Probe ausgehende Fluoreszenz-Emissionslicht, das eine unterschiedliche Wellenlänge aufweist, wird nach bekannten Methoden bestimmt. Durch geeignete Variation der Substituenten R¹, R² und R³ ermöglicht die vorliegende Erfindung die Bereitstellung eines für die Bestimmung beliebiger Analyten optimierter Testformate.

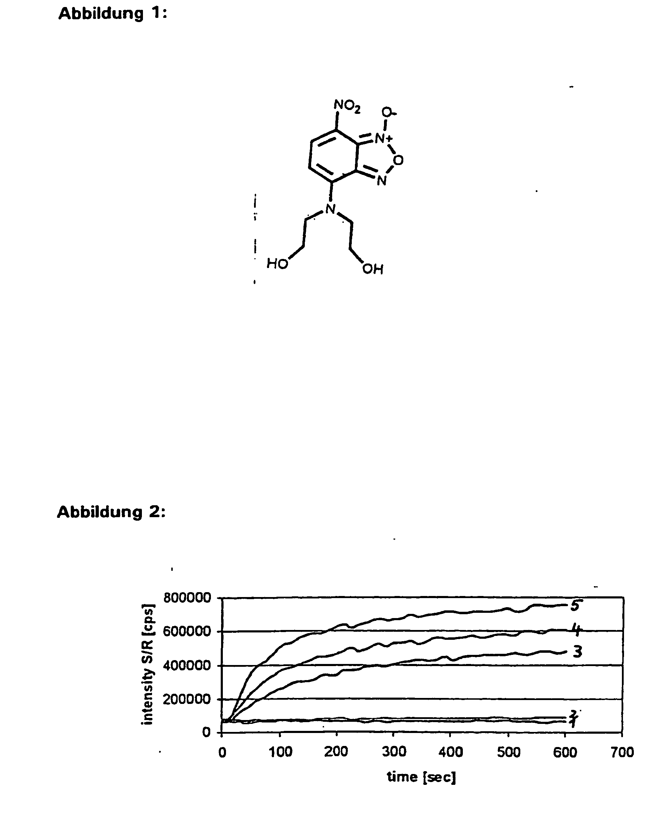

Bei dem Redoxindikator (I) ist bevorzugt, dass zur Erhöhung der Löslichkeit eine oder mehrere hydrophile Gruppen, z.B. OH-Gruppen, COOH-Gruppen etc., vorhanden sind. In einer besonders bevorzugten Ausführungsform sind R¹ und R² mit OH substituierte C₁₋₂-Alkylgruppen, wie etwa Hydroxyethylgruppen oder Polyoxyethylengruppen. R³ ist vorzugsweise NO₂ und n ist 1. Ein besonders bevorzugtes Beispiel für einen erfindungsgemäßen Redoxinitiator ist in Abbildung 1 gezeigt.

Ein weiterer Aspekt der Erfindung ist die Verwendung eines Reagenz zum Nachweis eines Analyten durch eine Redoxreaktion und eine fluorimetrische Bestimmung, wobei das Reagenz als Redoxindikator eine Verbindung der allgemeinen Formel (I) wie zuvor angegeben umfasst.

Neben dem Redoxindikator kann das Reagenz noch weitere Bestandteile, ausgewählt aus Enzymen, Coenzymen, Hilfsstoffen, Puffern und Mediatoren enthalten.

Weiterhin soll die vorliegende Erfindung durch die nachfolgenden Abbildungen und das Beispiel erläutert werden.

**Abbildung 1** zeigt das N-Oxid des NBD-Amins als Beispiel für einen erfindungsgemäßen Redoxindikator.

**Abbildung 2** zeigt die Kinetik der NBD-Amin-N-Oxid-Reduktion in einem System zum Nachweis von Glucose bei verschiedenen Glucosekonzentrationen.

### Beispiel: Glucosebestimmung mit einem NBD-Amin-N-Oxid als Redoxindikator

In einer 3 ml Fluoreszenzküvette wurden folgende Verbindungen vorgelegt (die Konzentrationsangaben beziehen sich dabei auf die Endkonzentration in der Küvette; das N-Oxid des NBD-Amins wurde gemäß P.B. Ghosh, M.W. Whitehouse, J. Med. Chem., 11, 305 -311 (1968) hergestellt):

| | |
|---|---|
| Glucose-Dehydrogenase (GlucDH) | 1,3 U/ml |
| Diaphorase | 1,3 U/ml |
| NAD⁺ | 36,9 µmol/l |
| N-Oxid des NBD-Amins | 35,4 µmol/l |

Durch Zugabe einer wässrigen Glucoselösung (0,1 M Phosphat Puffer, pH 7,4 mit 1 % NaCl) wurde die Reaktion gestartet. Die Kinetik der Reaktion wurde dabei bei einer Anregungswellenlänge von 470 nm und einer Emissionswellenlänge von 560 nm für verschiedene Glucosekonzentrationen aufgenommen. Das Ergebnis des Versuchs ist in Abbildung 2 dargestellt.

Aus Abbildung 2, in der für unterschiedliche Glucosekonzentrationen die Intensität des Fluoreszenzsignals (Intensity) in Impulsen pro Sekunde (cps) gegen die Zeit (time) in Sekunden ("sec") aufgetragen ist, ist zu erkennen, dass eine Zunahme der Fluoreszenz gefunden wird, die proportional zu der in der Probe vorhandenen Glucosekonzentration ist. Dabei entsprechen die Messkurven 1 bis 5 Glucosekonzentrationen von 0, 0.06, 1.2, 2.4, und 4 (jeweils mg/dL).

## Patentansprüche

1. Verfahren zum Nachweis eines Analyten durch eine Redoxreaktion und eine fluorimetrische Bestimmung,
**dadurch gekennzeichnet,**
**dass** man eine den Analyten enthaltende Probe mit einem Nachweisreagenz in Kontakt bringt, das als fluorimetrischen Redoxindikator eine Verbindung der allgemeinen Formel (I) enthält: 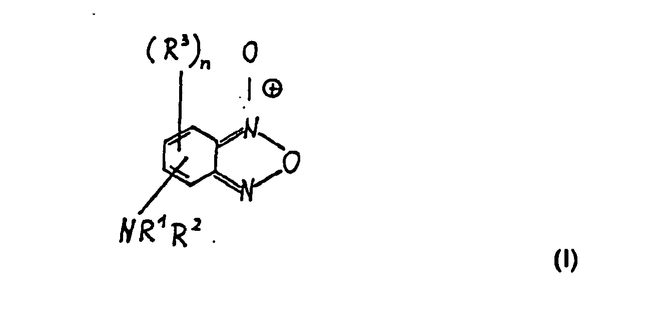 worin R¹ und R² jeweils unabhängig ausgewählt werden aus R, (CH₂CH₂O)ₘR, COR, COOR und OCOR,
R³ jeweils unabhängig ausgewählt wird aus NO₂, CN, R, OR, OCOR, COOR, SR und Halogen,
R H oder C₁-C₄-Alkyl ist, wobei Alkyl gegebenenfalls mit Halogen, OR, SR, NR₂, COOR, CONR₂, SO₃R und Salzen hiervon oder/und PO(OR)₃ und Salzen hiervon substituiert ist,
m eine ganze Zahl von 1-20 ist und
n 1, 2 oder 3 ist.

2. Verfahren nach Anspruch 1,
**dadurch gekennzeichnet,**
**dass** R¹ und R² eine mit OH substituierte C₁-C₂-Alkylgruppe sind.

3. Verfahren nach Anspruch 1 oder 2,
**dadurch gekennzeichnet,**
**dass** R³ NO₂ ist.

4. Verfahren nach einem der Ansprüche 1 bis 3,
**dadurch gekennzeichnet,**
**dass** der Redoxindikator (I) direkt Elektronen aufnehmen kann.

5. Verfahren nach einem der Ansprüche 1 bis 3,
**dadurch gekennzeichnet,**
**dass** der Redoxindikator (I) über einen Mediator Elektronen aufnehmen kann.

6. Verfahren nach einem der Ansprüche 1 bis 5,
**dadurch gekennzeichnet,**
**dass** man als Analyten eine oxidierbare Substanz nachweist.

7. Verfahren nach Anspruch 6,
**dadurch gekennzeichnet,**
**dass** man ein Nachweisreagenz verwendet, das weiterhin ein oder mehrere Enzyme zur Reduktion oder Oxidation des Analyten und gegebenenfalls ein Coenzym enthält.

8. Verfahren nach Anspruch 6 oder 7,
**dadurch gekennzeichnet,**
**dass** man als Analyten Glucose, Lactat, Alkohol, Galactose, Cholesterin, Fructose, Glycerin, Pyruvat, Creatinin, Alanin, Phenylalanin, Leucin, Triglyceride oder HDL-Cholesterin nachweist.

9. Verfahren nach Anspruch 8,
**dadurch gekennzeichnet,**
**dass** man einen Nachweis von Glucose mit Glucose-Oxidase, Glucose-Dye-Oxidoreductase oder Glucose-Dehydrogenase/Diaphorase durchführt.

10. Verfahren nach einem der Ansprüche 1 bis 5,
**dadurch gekennzeichnet,**
**dass** man als Analyten ein eine Redoxreaktion katalysierendes Enzym oder ein Enzym, dessen Reaktion an eine Oxidoreduktase-Reaktion gekoppelt werden kann, nachweist.

11. Verfahren nach Anspruch 10,
**dadurch gekennzeichnet,**
**dass** man als Analyten Glutamat-Oxalacetat-Transaminase (GOT), (AST), Glutamat-Pyruvat-Transaminase (GPT), Alanin-Amino-Transferase (ALT), Lactatdehydrogenase (LDH) oder Creatin-Kinase (CK) nachweist.

12. Verwendung eines Reagenz zum Nachweis eines Analyten durch eine Redoxreaktion und eine fluorimetrische Bestimmung, wobei das Reagenz als Redoxindikator eine Verbindung der allgemeinen Formel (I) umfasst: 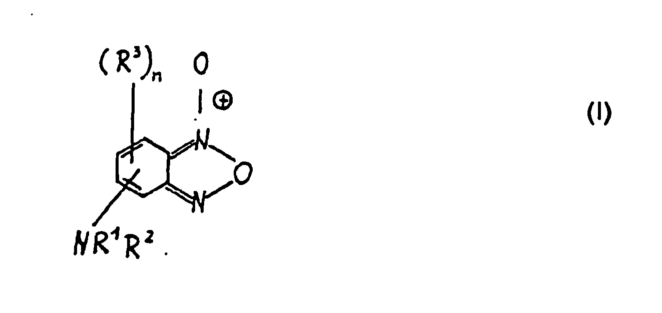 worin R¹ und R² jeweils unabhängig ausgewählt werden aus R, (CH₂CH₂O)ₘ R, COR, COOR und OCOR,
R³ jeweils unabhängig ausgewählt wird aus NO₂, CN, R, OR, OCOR, COOR, SR und Halogen,
R H oder C₁-C₄-Alkyl ist, wobei Alkyl gegebenenfalls mit Halogen, OR, SR, NR₂, COOR, CONR₂, SO₃R und Salzen hiervon oder/und PO(OR)₃ und Salzen hiervon substituiert ist,
m eine ganze Zahl von 1-20 ist und
n 1, 2 oder 3 ist.

13. Verwendung nach Anspruch 12, wobei das Reagenz weitere Bestandteile ausgewählt aus Enzymen, Coenzymen, Hilfsstoffen, Puffern und Mediatoren umfasst.

## Claims

1. Method of detecting an analyte by means of a redox reaction and fluorometric determination, **characterised in that** a sample containing the analyte is brought into contact with a detecting reagent which contains, as a fluorometric redox indicator, a compound having the general formula (I): 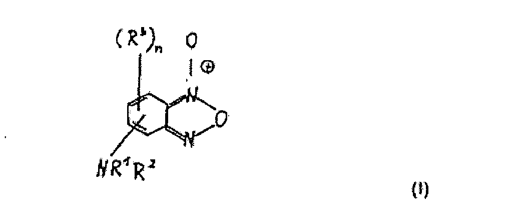 where R¹ and R² are in each case selected, independently, from R, (CH₂CH₂O)ₘR, COR, COOR and OCOR,
R³ is in each case selected, independently, from NO₂, CN, R, OR, OCOR, COOR, SR and a halogen,
R is H or a C₁-C₄-alkyl, the alkyl possibly being substituted with a halogen, OR, SR, NR₂, COOR, CONR₂, SO₃R or salts thereof and/or PO(OR)₃ or salts thereof,
m is a whole number from 1 to 20 and
n is 1, 2 or 3.

2. Method according to claim 1, **characterised in that** R¹ and R² are a C₁-C₂-alkyl group substituted with OH.

3. Method according to claim 1 or 2, **characterised in that** R³ is NO₂.

4. Method according to one of claims 1 to 3, **characterised in that** the redox indicator (I) is able to directly absorb electrons.

5. Method according to one of claims 1 to 3, **characterised in that** the redox indicator (I) is able to absorb electrons via a mediator.

6. Method according to one of claims 1 to 5, **characterised in that** what is detected as an analyte is an oxidisable substance.

7. Method according to claim 6, **characterised in that** the detecting reagent used is one which also contains one or more enzymes for reducing or oxidising the analyte, and which possibly contains a co-enzyme.

8. Method according to claim 6 or 7, **characterised in that** what are detected as analytes are glucose, lactate, alcohol, galactose, cholesterol, fructose, glycerin, pyruvate, creatinine, alanine, phenylalanine, leucine, triglycerides or HDL cholesterol.

9. Method according to claim 8, **characterised in that** detection of glucose is carried out with glucose oxidase, glucose dye oxidoreductase or glucose dehydrogenase/diaphorase.

10. Method according to one of claims 1 to 5, **characterised in that** what is detected as an analyte is an enzyme which catalyses a redox reaction or an enzyme whose reaction can be coupled to an oxidoreductase reaction.

11. Method according to claim 10, **characterised in that** what are detected as analytes are glutamate oxaloacetate transaminase (GOT), (AST), glutamate pyruvate transaminase (GPT), alanine aminotransferase (ALT), lactate dehydrogenase (LDH) or creatine kinase (CK).

12. Use of a reagent to detect an analyte by means of a redox reaction and fluorometric determination, wherein the reagent comprises, as a redox indicator, a compound having the general formula (I): 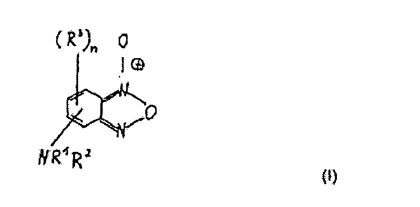 where R₁ and R₂ are in each case selected, independently, from R, (CH₂CH₂O)ₘ R, COR, COOR and OCOR,
R³ is in each case selected, independently, from NO₂, CN, R, OR, OCOR, COOR, SR and a halogen,
R is H or a C₁-C₄-alkyl, the alkyl possibly being substituted with a halogen, OR, SR, NR₂, COOR, CONR₂, SO₃R or salts thereof and/or PO(OR)₃ or salts thereof,
m is a whole number from 1 to 20 and
n is 1, 2 or 3.

13. Use according to claim 12, wherein the reagent comprises other constituents selected from enzymes, coenzymes, adjuvants, buffers and mediators.

## Revendications

1. Procédé pour la détection d'un analyte par une réaction redox et une détermination fluorimétrique, **caractérisé en ce qu'**on met en contact un échantillon contenant l'analyte avec un réactif de détection, qui contient comme indicateur de redox fluorimétrique un composé de formule générale (I) : 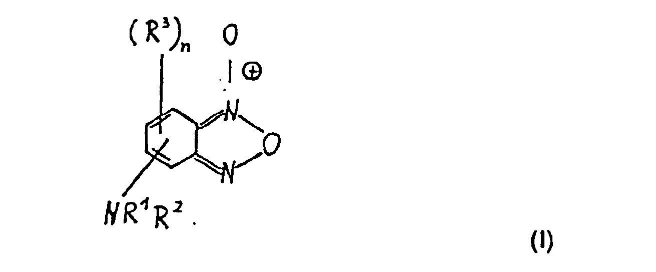 où
R¹ et R² sont à chaque fois choisis indépendamment l'un de l'autre parmi R, (CH₂CH₂O)ₘR, COR, COOR et OCOR,
R³ est à chaque fois choisi indépendamment parmi NO₂, CN, R, OR, OCOR, COOR, SR et halogène,
R représente H ou C₁-C₄-alkyle, alkyle étant le cas échéant substitué par halogène, OR, SR, NR₂, COOR, CONR₂, SO₃R et les sels de ceux-ci ou/et PO(OR)₃ et les sels de celui-ci,
m est un nombre entier de 1-20 et
n vaut 1, 2 ou 3.

2. Procédé selon la revendication 1, **caractérisé en ce que** R¹ et R² représentent un groupe C₁-C₂-alkyle substitué par OH.

3. Procédé selon la revendication 1 ou 2, **caractérisé en ce que** R³ représente NO₂.

4. Procédé selon l'une quelconque des revendications 1 à 3, **caractérisé en ce que** l'indicateur de redox (I) peut absorber directement des électrons.

5. Procédé selon l'une quelconque des revendications 1 à 3, **caractérisé en ce que** l'indicateur de redox (I) peut absorber des électrons via un médiateur.

6. Procédé selon l'une quelconque des revendications 1 à 5, **caractérisé en ce qu'**on détecte, comme analyte, une substance oxydable.

7. Procédé selon la revendication 6, **caractérisé en ce qu'**on utilise un réactif de détection, qui contient en outre une ou plusieurs enzymes pour la réduction ou l'oxydation de l'analyte et le cas échéant une coenzyme.

8. Procédé selon la revendication 6 ou 7, **caractérisé en ce qu'**on détecte, comme analyte, le glucose, le lactate, l'alcool, le galactose, le cholestérol, le fructose, le glycérol, le pyruvate, la créatinine, l'alanine, la phénylalanine, la leucine, les triglycérides ou le cholestérol HDL.

9. Procédé selon la revendication 8, **caractérisé en ce qu'**on réalise une détection de glucose avec une glucose-oxydase, une glucose-dye-oxydoréductase ou une glucose-déshydrogénase/diaphorase.

10. Procédé selon l'une quelconque des revendications 1 à 5, **caractérisé en ce qu'**on détecte, comme analyte, une enzyme catalysant une réaction redox ou une enzyme dont la réaction peut être couplée à une réaction d'une oxydoréductase.

11. Procédé selon la revendication 10, **caractérisé en ce qu'**on détecte, comme analyte, une glutamate-oxalacétate-transaminase (GOT),
(AST), une glutamate-pyruvate-transaminase (GPT), une alanine-amino-transférase (ALT), une lactate-déshydrogénase (LDH) ou une créatine-kinase (CK).

12. Utilisation d'un réactif pour la détection d'un analyte par une réaction redox et une détermination fluorimétrique, le réactif, en tant qu'indicateur de redox, comprenant un composé de formule générale (I) : 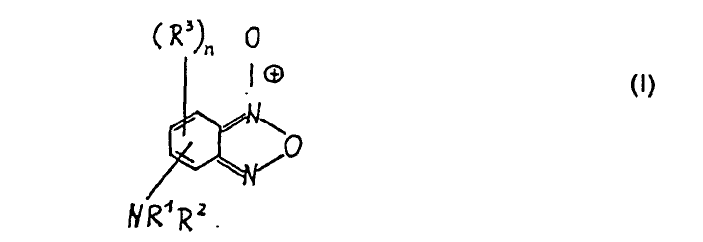 où
R¹ et R² sont à chaque fois choisis indépendamment l'un de l'autre parmi R, (CH₂CH₂O)ₘR, COR, COOR et OCOR,
R³ est à chaque fois choisi indépendamment parmi NO₂, CN, R, OR, OCOR, COOR, SR et halogène,
R représente H ou C₁-C₄-alkyle, alkyle étant le cas échéant substitué par halogène, OR, SR, NR₂, COOR, CONR₂, SO₃R et les sels de ceux-ci ou/et PO(OR)₃ et les sels de celui-ci,
m est un nombre entier de 1-20 et
n vaut 1, 2 ou 3.

13. Utilisation selon la revendication 12, le réactif comprenant d'autres constituants choisis parmi les enzymes, les coenzymes, les adjuvants, les tampons et les médiateurs.
